# EUROPÄISCHE PATENTSCHRIFT

(11) **EP 1 673 847 B1**
(45) Veröffentlichungstag und Bekanntmachung des Hinweises auf die Patenterteilung: **05.03.2008**
(21) Anmeldenummer: 04789955.4
(22) Anmeldetag: 11.10.2004
(51) Int. Cl.: H02K 5/22, H02K 5/24, H01R 13/627

(54) **ELEKTROMOTOR**
ELECTRIC MOTOR
MOTEUR ELECTRIQUE

(30) Priorität: 10.10.2003 DE 10347850
(43) Veröffentlichungstag der Anmeldung: 28.06.2006
(73) Patentinhaber: ROBERT BOSCH GMBH, 70442 Stuttgart (DE)
(72) Erfinder: SAUR, Martin, 73084 Salach (DE); MERSCHROTH, Bernhard, 77833 Ottersweier (DE); SCHIEL, Andreas, 76593 Gernsbach-Lautenbach (DE)
(86) Internationale Anmeldenummer: PCT/DE2004/002249
(87) Internationale Veröffentlichungsnummer: WO 2005/036715

(56) Entgegenhaltungen:
- EP-A- 1 107 432
- US-A- 4 690 366
- PATENT ABSTRACTS OF JAPAN Bd. 006, Nr. 060 (E-102), 17. April 1982 (1982-04-17) -& JP 57 003548 A (HITACHI LTD), 9. Januar 1982 (1982-01-09)
- PATENT ABSTRACTS OF JAPAN Bd. 017, Nr. 668 (E-1473), 9. Dezember 1993 (1993-12-09) & JP 05 219683 A (FUJI ELECTRIC CO LTD), 27. August 1993 (1993-08-27)

## Beschreibung

Die Erfindung betrifft einen Elektromotor, insbesondere einen Gebläsemotor für Klimagebläse eines Kraftfahrzeuges, nach dem Oberbegriff des unabhängigen Anspruchs.

### Stand der Technik

Bei einer Vielzahl von Anwendungen von Elektromotoren werden diese in ein als Motorgehäuse dienendes Aufnahmegehäuse eingebracht, welches dann zur weiteren Befestigung des Elektromotors dient. Diese Aufnahmegehäuse werden zudem zur Entkopplung von Motorschwingungen genutzt. So sind bspw. Gebläsemotoren für Heiz- und Klimaanlagen, wie sie typischerweise in Kraftfahrzeugen verwendet werden, in der Regel gegenüber dem Fahrzeug schwingungstechnisch entkoppelt. Eine Übertragung des Körperschalls des Elektromotors bzw. der Gebläseeinheit auf die Karosserie des Fahrzeuges und damit in den Fahrgastraum hinein, gilt es zu reduzieren.

Gängige Halterungsmethoden für derartige Motoren sehen bspw. vor, den Elektromotor in ein als Motorgehäuse dienendes Aufnahmegehäuse einzubringen, wobei zwischen dem Elektromotor und dem Aufnahmegehäuse elastische Entkopplungsmittel eingebracht sind, sodass eine Entkopplung der Motorschwingungen gegenüber dem Motorgehäuse und somit bspw. gegenüber einer Fahrzeugskarosserie ermöglicht wird. An der Motorhalterung selbst befindet sich typischerweise ein Flansch zur sicheren Verbindung des Motors mit der Klimaanlage, bspw. über ein an der Karosserie ausgebildetes Trägerteil.

So offenbart bspw. die DE 43 34 124 A1 eine Vorrichtung zur Aufnahme eines Elektromotors, die eine besonders schwingungsarme und damit geräuschdämpfende Wirkung dadurch erzielt, dass zwischen den Innenwänden dieser Aufnahmevorrichtung und den diesen zugewandten Außenwänden des Motorgehäuses wenigstens ein elastisches Dämpfungselement angeordnet ist, das sich an den einander zugewandten Wänden der Aufnahmevorrichtung und des Motorgehäuses abstützt.

Ein weiterer kritischer Punkt bei der Übertragung des durch den Elektromotor erzeugten Körperschalls auf das Motorgehäuse und somit auf die Fahrzeugkarosserie ist der typischerweise verwendete Steckanschluss zur elektrischen Energieversorgung des Elektromotors. Der Motor ist dabei mit einem integrierten Steckanschluss versehen. Da die Motoren komplett durch den Motorhalter umschlossen sind, wird die Kabelverbindung zur Energieversorgung mittels eines Steckers, der typischerweise von außen am Motorgehäuse verrastet ist, hergestellt. Die mechanische Fixierung dient der Aufnahme der auftretenden Kabel- bzw. Steckerauszugskräfte bei der Montage und dem Betrieb des Gebläses. Eine derartige Vorrichtung ist beispielsweise in der US 4 690 366 A gezeigt

Aus der WO 00/48 293 A1 ist ein Klimagebläsemotor nebst Aufnahmegehäuse bekannt, bei dem ein Steckerelement zur elektrischen Energieversorgung des Antriebsmotors durch das Aufnahmegehäuse hindurchgeführt wird. Dabei ist die entsprechende Öffnung im Aufnahmegehäuse des Elektromotors gerade so groß, dass das verbindende Steckelement formschlüssig durch diese Aufnahmeöffnung hindurchgeführt werden kann. Auf diese Weise wird in der Anordnung der WO 00/48 293 A1 vermieden, dass angesaugte Luft zwischen dem Steckerelement und dem Aufnahmegehäuse für den Elektromotor aus dem Gebläse austreten kann. Zusätzlich wird in der WO 00/48 293 A1 vorgeschlagen, zwischen dem Steckerelement und dem Aufnahmegehäuse ein abdichtendes Element einzubringen, welches zum einen den Stecker am Aufnahmegehäuse befestigt und zum anderen den an dieser Stelle unerwünschten Luftaustritt verhindert. Eine entsprechende Anordnung ist zudem auch aus der EP 1 107 432 A1 bekannt.

Die der vorliegenden Erfindung zugrunde liegende Aufgabe besteht darin, einen Stecker gegen ein Abziehen vom Elektromotor zu sichern und gleichzeitig die vom Elektromotor erzeugten Geräusche und Schwingungen vor einer Einkopplung in das Motorgehäuse fernzuhalten, bzw. in ihrem Durchgriff deutlich zu bedämpfen.

### Vorteile der Erfindung

Der erfindungsgemäße Elektromotor weist ein als Motorgehäuse dienendes Aufnahmegehäuse mit einer Aufnahmeöffnung auf, in das der Elektromotor zumindest teilweise hineinragt. Des weiteren sind Verbindungsmittel zur elektrischen Energieversorgung des Elektromotors und Befestigungsmittel für diese elektrischen Verbindungsmittel vorgesehen, wobei die elektrischen Verbindundsmittel einen Stecker und eine am Elektromotor ausgebildete Steckeraufnahme aufweisen. Erfindungsgemäß ist der Stecker zur sicheren Kontaktierung des Elektromotors unter Verzicht von am Motorgehäuse angebrachten Befestigungsmitteln am Elektromotor verrastbar.

Auf diese Weise ist es möglich, die vom Elektromotor erzeugten Schwingungen, die über das Steckerelement weitergeleitet werden, weitgehend vom Motorgehäuse zu entkoppeln, so dass keine Schwingungsbrücke zwischen dem Motor und dem Motorgehäuse durch die Verbindungsmittel erzeugt und eine Übertragung der Betriebsschwingungen der Einheit Motor/Stecker auf das Klimagehäuse verhindert wird. Gleichzeitig kann durch die Verrastung am Elektromotor eine mechanisch feste Verbindung des Motors mit dem Stecker der Verbindungselemente geschaffen werden.

Vorteilhafte Weiterbildungen und Ausführungsformen des erfindungsgemäßen Elektromotors werden durch die in den Unteransprüchen enthaltenen Merkmale ermöglicht.

Besonders vorteilhaft ist es, wenn die Steckeraufnahme im Bereich eines Lagerbügels des Elektromotors ausgebildet ist. Zur sicheren Kontaktierung weist der Stecker zumindest ein federelastisches Rastelement auf, welches am Elektromotor und insbesondere an dem Lagerbügel des Elektromotors verrastbar ist. Vorteilhafterweise weist der Stecker zumindest zwei Rasthaken auf. Aufgrund einer solchen Verrastung kann das Motordesign im Wesentlichen unverändert bleiben, da keine zusätzlichen Befestigungsmaßnahmen benötigt werden, trotzdem aber eine mechanisch sichere Verbindung des Elektromotors mit den elektrischen Verbindungselementen möglich ist.

Unter Verwendung eines erfindungsgemäßen Elektromotors ist somit ein Gebläse, insbesondere ein Klimagebläse für die Heiz- und Klimaanlage eines Kraftfahrzeuges realisierbar, welches es ermöglicht, dass die Betriebsschwingungen des antreibenden Elektromotors davon abgehalten werden, auf den Resonanzkörper der Klimaanlage übergeleitet zu werden, sodass störende Geräuschentwicklungen vermieden werden können. Mit dem erfindungsgemäßen Elektromotor ist es somit in vorteilhafter Weise möglich, vom Motor erzeugte Geräusche und Schwingungen von einer Einkopplung in die Klimaanlage und somit in die Karosserie des Fahrzeuges weitgehend fernzuhalten. Insbesondere ist es möglich, Schwingungen, die über elektrische Verbindungsmittel vom Elektromotor auf das Motorgehäuse übertragen werden, weitgehend zu bedämpfen und gleichzeitig einen mit dem Elektromotor verrasteten Stecker vor einem Abziehen zu sichern.

Weitere Vorteile des erfindungsgemäßen Elektromotors sind der nachfolgenden Zeichnung sowie der zugehörigen Beschreibung der Ausführungsbeispiel zu entnehmen.

### Zeichnung

In der Zeichnung sind Ausführungsbeispiel des erfindungsgemäßen Elektromotors dargestellt, die in der nachfolgenden Beschreibung näher erläutert werden. Die Figuren der Zeichnung, deren Beschreibung sowie die Ansprüche enthalten zahlreiche Merkmale in Kombination. Ein Fachmann wird diese Merkmale auch einzeln betrachten und zu sinnvollen, weitern Kombination zusammenfassen.

Es zeigen:
- Figur 1: einen Längsschnitt durch einen erfindungsgemäßen Elektromotor mit Motorgehäuse in einer vereinfachten, schematischen Darstellung,
- Figur 2: eine Ansicht auf ein weiteres Ausführungsbeispiel eines erfindungsgemäßen Elektromotors,
- Figur 3: eine Detailansicht des Elektromotors gemäß Figur 2,
- Figur 4: eine Aufsicht auf ein Ausführungsbeispiel eines erfindungsgemäßen Elektromotors im Bereich seines antriebsseitigen Lagerbügels in Blickrichtung B gemäß Figur 2,
- Figur 5: einen Querschnitt durch Figur 4 entlang der Linie AA',
- Figur 6: ein Detail einer Seitenansicht eines erfindungsgemäßen Elektromotors gemäß Figur 4,
- Figur 7: eine Aufsicht auf ein Ausführungsbeispiel eines Steckers für einen erfindungsgemäßen Elektromotor,
- Figur 8: einen Längsschnitt durch den Stecker gemäß Figur 7,
- Figur 9: eine schematische Darstellung eines alternativen Ausführungsbeispiels eines Steckers für den erfindungsgemäßen Elektromotor,
- Figur 10: eine Detaildarstellung eines in den Elektromotor eingesetzten Steckers gemäß Figur 9

### Beschreibung der Ausführungsbeispiele

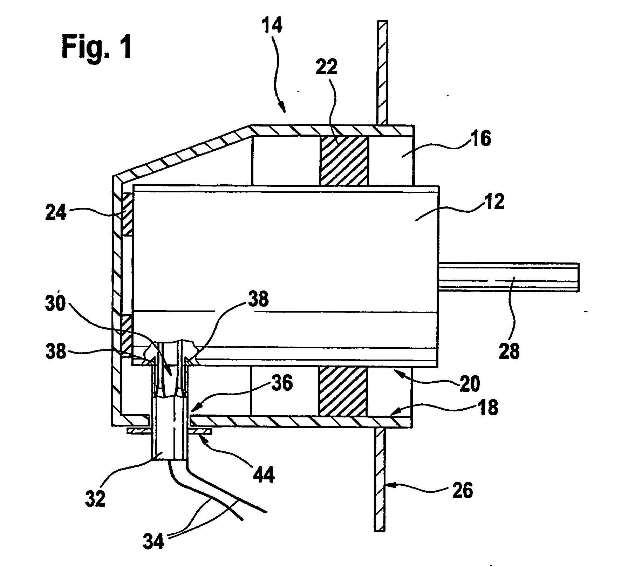

Figur 1 beschreibt einen Elektromotor 12 mit einem als Motorgehäuse dienenden Aufnahmegehäuse 14, welches eine Aufnahmeöffnung 16 aufweist. Das Motorgehäuse 14 ist im Wesentlichen topfförmig ausgeformt, sodass der Elektromotor 12 durch die Aufnahmeöffnung 16 in das Motorgehäuse 14 eingeführt werden kann.

Zwischen der Innenwand 18 des Motorgehäuses 14 und der Außenwand 20 des Elektromotors 12, die bspw. durch das Polgehäuse des Elektromotors gebildet sein kann, sind elastische Dämpfelemente 22 bzw. 24 angeordnet. Diese Dämpfelemente 22 bzw. 24 dienen dazu, Schwingungen des Elektromotors gegenüber dem Motorgehäuse 14 zu dämpfen. In typischer Weise sind die Dämpfelemente aus einem elastischen Material, wie bspw. Gummi, ausgeformt. Durch eine flanschartige Anordnung 26 kann das Motorgehäuse 14 und somit der Elektromotor 12 an einem Anbauteil, bspw. einer Klimaanlage, befestigt werden. So ist es bspw. möglich, den Elektromotor zum Antrieb eines in Figur 1 nicht dargestellten Gebläserades einer Heiz- und/oder Klimaanlage eines Kraftfahrzeuges zu verwenden. In diesem Fall wird ein entsprechendes Gebläserad auf die Welle 28 des Elektromotors 12 aufgesetzt und das Motorgehäuse 14 über seinen Flanschbereich 26 im Klimakasten des Kraftfahrzeuges befestigt.

Zur Energieversorgung weist der Elektromotor 12 Steckkontakte 30 auf, auf die ein entsprechendes, elektrisches Anschlusselement, bspw. ein Stecker 32, aufgesetzt werden kann. Ein solcher Stecker 32 ist über entsprechende Verbindungsmittel 34 dann bspw. mit dem Bordnetz eines Kraftfahrzeuges verbunden. Der elektrische Anschluss-Stecker ist durch eine Öffnung 36 im Motorgehäuse 14 hindurchgeführt und wird mit Rastelementen 38 direkt am Elektromotor befestigt. Insbesondere erfolgt die Befestigung des Steckers 32 am Elektromotor unter Verzicht von Befestigungsmitteln, die am Motorgehäuse 14 angebracht sind. Bei dieser Befestigung des Steckers 32 direkt am Motor 12 wird verhindert, dass sich eine Schwingungsbrücke zum Motorhalter 14 ausbilden kann, sodass eine Übertragung von Betriebsschwingungen des Motors über den Stecker auf das Motorgehäuse 14 und somit bspw. auf die Klimaanlage verhindert wird. Zur Verhinderung einer solchen Schwingungsbrücke ist im Ausführungsbeispiel der Figur 1 im Motorgehäuse 14 eine entsprechend große Öffnung 36 vorgesehen, durch die der Stecker 32 hindurchgeführt werden kann, ohne dass ein Schwingungskontakt zwischen dem Steckerelement 32 und dem Motorgehäuse 14 auftritt. Um eine Luftströmung durch die Öffnung 36 des Motorgehäuses 14 zu vermeiden weist das Steckerelement 32 im Ausführungsbeispiel gemäß Figur 1 einen tellerförmigen Kranz 44 auf, der die Öffnung 36 im Motorgehäuse 14 abdeckt.

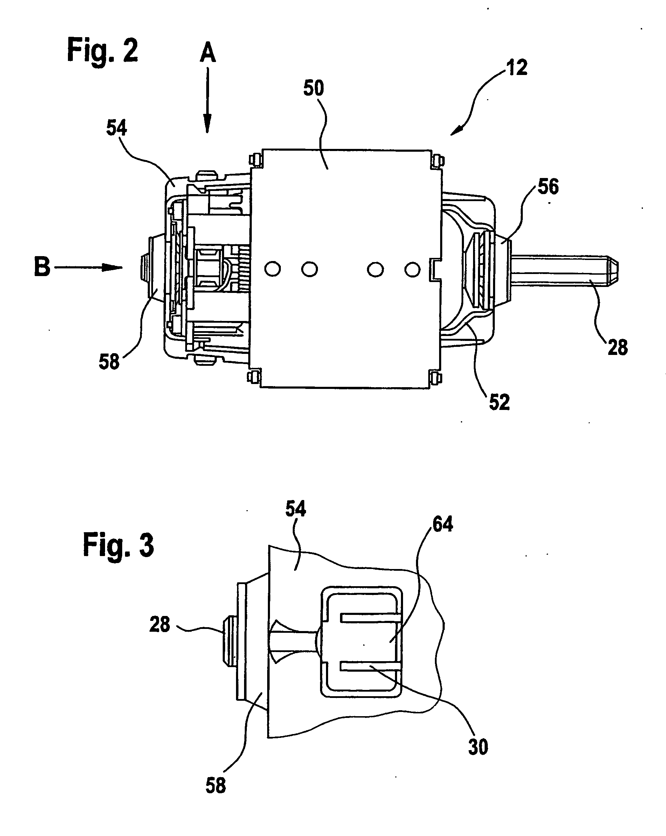

Figur 2 zeigt einen erfindungsgemäßen Elektromotor 12 in einer detaillierteren Ansicht.

Der Elektromotor 12 weist ein Polgehäuse 50 auf, welches gleichzeitig als Träger zweier Lagerbügel 52 bzw. 54 für Lager 56 bzw. 58 der Welle 28 des Elektromotors dient. Im Bereich des antriebsseitigen Lagerbügels 54 ist die elektrische Kontaktierung des erfindungsgemäßen Elektromotors vorgesehen. Der Lagerbügel 54 besitzt dazu, wie in Figur 3 in einer Detaildarstellung einer Aufsicht im Richtung A gemäß Figur 2 dargestellt ist, eine Ausnehmung 64, die als Steckerbuchse ausgebildet ist, und in die ein entsprechendes Verbindungsmittel, bspw. ein Stecker 32 eingesteckt und mit den Kontaktstiften 30 des Elektromotors kontaktiert werden kann.

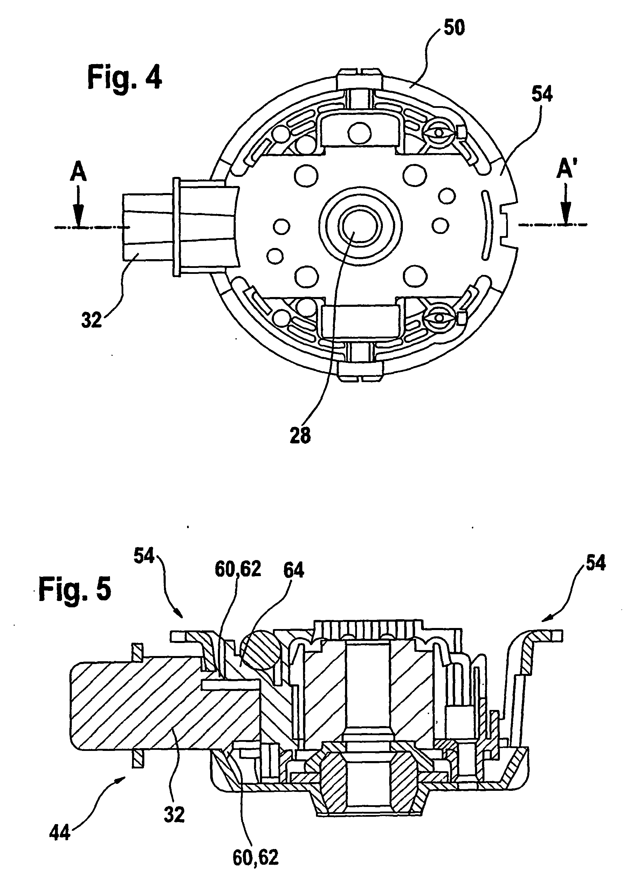

Figur 4 zeigt eine Aufsicht auf das antriebsseitige Ende des erfindungsgemäßen Elektromotors gemäß Blickrichtung B der Figur 2 bei eingesetztem Verbindungsmittel in Form eines Steckers 32. Wie der Figur 4, und insbesondere einem in Figur 5 dargestellten Schnitt längs der Linie AA' der Figur 4 zu entnehmen ist, durchdringt der Stecker 32 den Lagerbügel 54 und wird durch entsprechende Rastelemente 60 am Lagerbügel und somit am Elektromotor 12 fixiert. Bei einer Verrastung des Steckers 30 direkt am Motor 12 bzw. dessen Lagerbügel 24 kann eine Schwingungsbrücke zum Motorhalter, in dem der Elektromotor entsprechend Figur 1 eingesetzt wird vermieden werden. Die Verrastung am Motor 12 erfolgt in vorteilhafter Weise direkt am Lagerbügel 54 unter Verzicht von Befestigungsmitteln am Motorgehäuse, sodass eine mechanisch feste Verbindung des Motors mit dem Stecker geschaffen wird, ohne dass das elektrische Verbindungsmittel als Schwingungsbrücke zwischen dem Elektromotor 12 und dem den Elektromotor aufnehmenden Motorgehäuse 14 wirkt.

Figur 5 zeigt in einer Schnittdarstellung entlang der Achse AA' der Figur 4, wie die elektrischen Verbindungsmittel, die im Ausführungsbeispiel der Figur 4 bzw. 5 als Stecker 30 ausgebildet sind, sicher am Elektromotor und insbesondere am Lagerbügel 54 des Elektromotors befestigt werden können. Dazu weist der Stecker 30 Rastnasen 62 auf, die bei in den Elektromotor eingeschobenem Stecker den Lagerbügel 54 hintergreifen. Über die Rastelemente 60, bspw. die Rastnasen 62 des Ausführungsbeispiels gemäß Figur 5 und gegebenenfalls über einen Formschluss des Steckers 30 in der am Elektromotor ausgebildeten Steckerbuchse 64, die als Steckeraufnahme dient, ist es möglich die Befestigung der elektrischen Verbindungsmittel direkt am Elektromotor und insbesondere unter Verzicht von Befestigungsmitteln, die am Motorgehäuse 14 ausgebildet wären, vorzusehen.

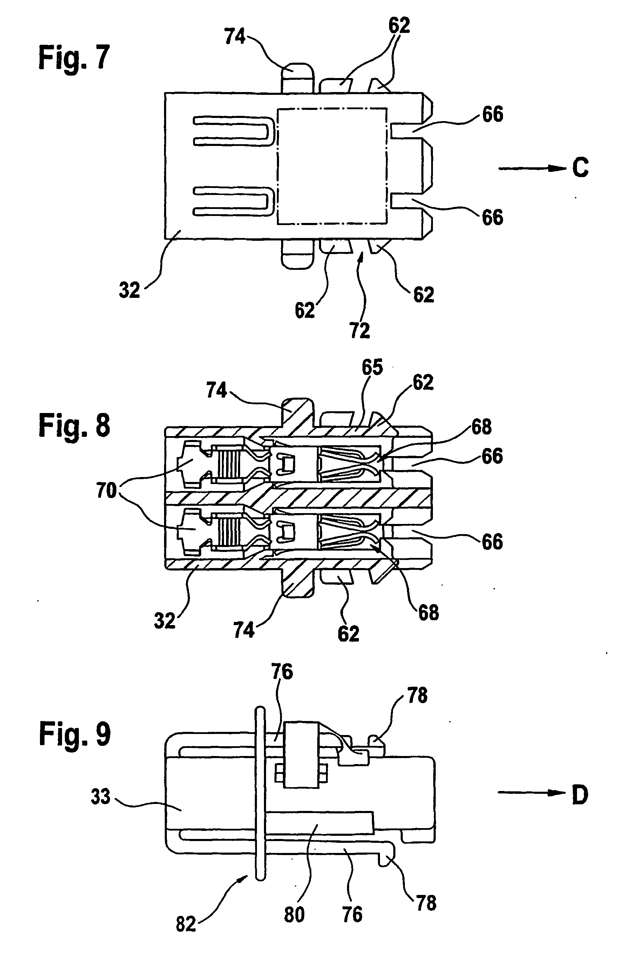

Figur 7 und Figur 8 zeigen ein erstes Ausführungsbeispiel für einen Stecker 32 des erfindungsgemäßen Elektromotors. Der Stecker 32 wird zur elektrischen Kontaktierung des Elektromotors in Richtung des Pfeils C gemäß Figur 7 in eine Steckeraufnahme 64 des Elektromotors eingeschoben. Dabei greifen in der Steckeraufnahme ausgebildete Kontaktstifte durch Öffnungen 66, die im Stecker ausgebildet sind, in das Steckerinnere hinein. Wie der Schnittzeichnung eines solchen Steckers 32 in Figur 8 zu entnehmen ist, werden die Kontaktstifte dann einzeln jeweils vom im Steckerelement ausgebildeten Kontaktfedern 68 fest umgriffen, sodass es zu einer elektrisch leitenden Kontaktierung zwischen den Kontaktstiften des Elektromotors auf der einen Seite und den Anschlusspolen 70 des Steckers 32 kommt. Über entsprechende elektrische Leitungen, die der Übersicht halber in Figur 7 bzw. Figur 8 nicht dargestellt sind, die jedoch mit den Anschlusspolen 70 kontaktiert sind ist der Stecker gegebenenfalls unter Zwischenschaltung eines Steuergerätes mit einer elektrischen Energieversorgung, bspw. der Batterie eines Kraftfahrzeuges verbunden.

Der Stecker 32 gemäß Ausführungsbeispiel der Figur 7 bzw. 8 weist auf seinem äußeren Umfang Rastnasen 62 auf, die es in beschriebener Weise ermöglichen, den Stecker 32 direkt am Lagerbügel des Elektromotors zu befestigen. Bei in die Steckeraufnahme, bzw. Steckerbuchse 62 eingeschobenem Stecker 32 kommt der Lagerbügel 54 somit in den Zwischenbereich 72, der sich in axialer Richtung des Steckers, d.h. in Richtung des Pfeils C in Figur 7, zwischen den Rastnasen 62 ergibt, zu liegen. Über in oder an den Rastnasen 62 ausgebildeten Schrägen kann erreicht werden, dass die Befestigung des Steckers 32 am Lagerbügel 54 eine gewisse Vorspannung erzeugt.

Werden die Rastnasen 62 bzw. ein gewisser Bereich dieser Rastnasen als federelastische Rastelemente 65 ausgebildet, wie dies im Schnitt der Figur 8 zu erkennen ist, kann auf einfache Weise die Befestigung des Steckers 32 am Elektromotor auch wieder gelöst werden. Durch einen entsprechenden Druck auf die Dorne 74, die an den federelastischen Rastelementen 65 ausgebildet sind, können die Rastelemente zusammengedrückt werden, sodass diese den Lagerbügel nicht mehr hintergreifen und der Stecker 32 aus der Steckeraufnahme auch wieder herausgezogen werden kann.

Figur 9 zeigt ein alternatives Ausführungsbeispiel eines Steckers 33 der elektrischen Verbindungsmittel für den erfindungsgemäßen Elektromotor. Der Stecker 33 wird in Richtung des Pfeils D in eine entsprechende Steckeraufnahme, die am Elektromotor ausgebildet ist, eingeschoben und mit den Kontaktstiften des Elektromotors kontaktiert. Der Stecker 33 gemäß Figur 9 besitzt an seinem äußeren Umfang zumindest zwei als federelastische Rasthaken 76 ausgebildete Befestigungsmittel. Bei in die Steckeraufnahme des Elektromotors eingeschobenem Stecker 33 hintergreifen die Rastnasen 78 der federelastischen Rasthaken 76 in erfindungsgemäßer Weise einen Lagerbügel des Elektromotors. Da sich der Stecker 33 andererseits über ein Stützelement 80 auf der Außenseite des Lagerbügels abstützt, können die elektrischen Verbindungsmittel in Form des Steckers 33 sicher am Elektromotor befestigt werden. In radialer Richtung wird der Stecker 33 von einem tellerförmigen Kragen 82 umschlossen und dieser tellerförmige Kragen dichtet, ähnlich , wie der Kragen 44 des Steckers 32, soweit wie möglich die Öffnung im Aufnahmegehäuse des Elektromotors, durch die die elektrischen Verbindungsmittel hindurchgeführt werden, ab. Hierbei ist darauf zu achten, dass es möglichst zu keiner Schwingungsbrücke zwischen dem mit dem Elektromotor kontaktierten Stecker 33 bzw. 32 und dem Motorgehäuse kommt, wie dies bspw. auch in Figur 1 dargestellt ist.

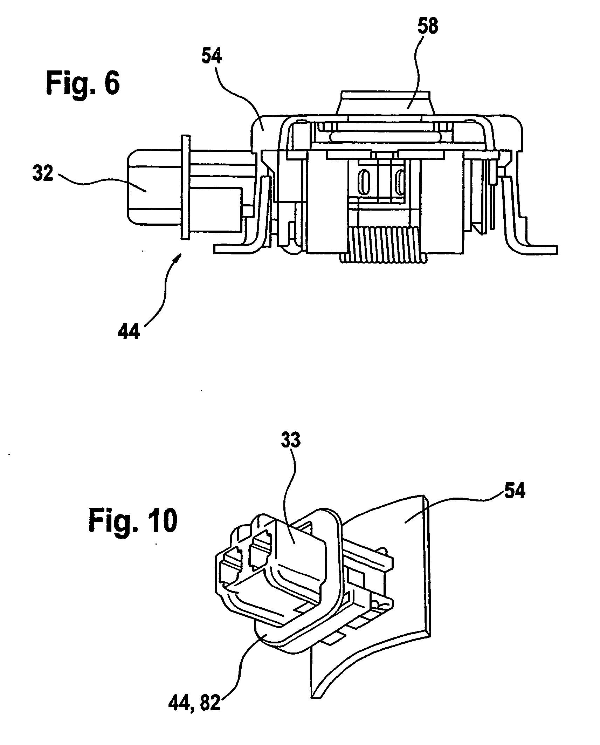

Figur 10 zeigt in eine Detailansicht den in die Steckeraufnahme eingesetzten Stecker 33, wie er sich am Lagerbügel 54 abstützt.

Der erfindungsgemäße Elektromotor und insbesondere die vorgeschlagene Befestigung der elektrischen Verbindungsmittel direkt und nur am Motor ermöglich in vorteilhafter Weise die Reduzierung der Schwingungsübertragung vom Motor auf das Motorgehäuse und somit in die Klimaanlage. Bei einer Verrastung des Steckers direkt am Motor wird die Schwingungsbrücke vom antreibenden Elektromotor zum Motorhalter unterbrochen und eine Übertragung der Betriebsschwingungen der Einheit Motor/Stecker auf das Klimagehäuse verhindert. Die Verrastung des Motors erfolgt insbesondere direkt am Lagerbügel, sodass eine mechanisch feste Verbindung des Motors mit dem Stecker geschaffen wird. Mit Hilfe einer solchen Verrastung kann das Motordesign selbst im Wesentlichen unverändert bleiben, da keine zusätzlichen Befestigungsmaßnahmen benötigt werden, und trotzdem eine mechanisch sichere Verbindung entsteht. Zur Aufnahme der Auszugskräfte der elektrischen Verbindungsmittel ist es besonders vorteilhaft, zumindest eine zweifache Verrastung des Steckers vorzusehen.

Der erfindungsgemäße Elektromotor ist nicht auf die in den Zeichnungen dargestellten Ausführungsbeispiele beschränkt. Insbesondere ist der erfindungsgemäße. Elektromotor nicht beschränkt auf die speziellen Ausführungsformen der Verrastungsmittel.

## Patentansprüche

1. Elektromotor (12), insbesondere ein Gebläsemotor für ein Klimagebläse eines Kraftfahrzeuges, mit einem als Motorgehäuse dienenden Aufnahmegehäuse (14) mit einer Aufnahmeöffnung (16), in das der Elektromotor (12) zumindest teilweise hineinragt, sowie mit Verbindungselementen (32, 33, 64) zur elektrischen Energieversorgung des Elektromotors und Befestigungsmitteln für die elektrischen Verbindungselemente (32, 33, 64), wobei die elektrischen Verbindungselemente (32, 33, 64) einen Stecker (32, 33) und eine am Elektromotor (12) ausgebildete Steckeraufnahme (64) aufweisen, wobei der Stecker (32, 33) durch eine Öffnung (36) im Motorgehäuse (14) hindurchführbar ist, **dadurch gekennzeichnet, dass** der Stecker (32, 33) zur sicheren Kontaktierung des Elektromotors (12) unter Verzicht von am Motorgehäuse (14) angebrachten Befestigungsmitteln am Elektromotor (12) verrastbar ist, wobei die Öffnung (36) im Motorgehäuse (14) entsprechend groß ist, so dass kein Schwingungskontakt zwischen dem Stecker (32, 33) und dem Motorgehäuse (14) auftritt.

2. Elektromotor nach Anspruch 1, **dadurch gekennzeichnet, dass** die Steckeraufnahme (64) im Bereich eines Lagerbügels (52, 54) des Elektromotors (12) ausgebildet ist.

3. Elektromotor nach Anspruch 1, **dadurch gekennzeichnet, dass** der Stecker (32, 33) zur sicheren Kontaktierung zumindest ein federelastisches Rastelement (60, 62, 76) aufweist.

4. Elektromotor nach einem der Ansprüche 1 oder 3, **dadurch gekennzeichnet, dass** der Stecker (32, 33) zumindest zwei Rasthaken (62, 76) aufweist.

5. Elektromotor nach einem der Ansprüche 2 bis 4, **dadurch gekennzeichnet, dass** der Stecker (32, 33) an dem Lagerbügel (52, 54) der Welle (28) des Elektromotors (12) verrastbar ist.

6. Gebläse, zumindest aufweisend ein Gebläserad und einen Elektromotor nach einem der Ansprüche 1 bis 5.

## Claims

1. Electric motor (12), in particular a blower motor for an air-conditioning blower of a motor vehicle, comprising an accommodation housing (14) which serves as a motor housing and has a receiving opening (16) into which the electric motor (12) at least partially protrudes, and also comprising connection elements (32, 33, 64) for supplying electrical power to the electric motor, and fixing means for the electrical connection elements (32, 33, 64), with the electrical connection elements (32, 33, 64) having a connector (32, 33) and a connector receptacle (64) which is formed on the electric motor (12), it being possible to pass the connector (32, 33) through an opening (36) in the motor housing (14), **characterized in that**, for the purpose of making reliable contact with the electric motor (12), the connector (32, 33) can be latched to the electric motor (12) without fixing means which are attached to the motor housing (14), with the opening (36) in the motor housing (14) being correspondingly large, so that no vibrational contact is made between the connector (32, 33) and the motor housing (14).

2. Electric motor according to Claim 1, **characterized in that** the connector receptacle (64) is formed in the region of a bearing bracket (52, 54) of the electric motor (12).

3. Electric motor according to Claim 1, **characterized in that** the connector (32, 33) has at least one spring-elastic latching element (60, 62, 76) for the purpose of making reliable contact.

4. Electric motor according to either of Claims 1 and 3, **characterized in that** the connector (32, 33) has at least two latching hooks (62, 76).

5. Electric motor according to one of Claims 2 to 4, **characterized in that** the connector (32, 33) can be latched to the bearing bracket (52, 54) of the shaft (28) of the electric motor (12).

6. Blower, at least having an impeller and an electric motor according to one of Claims 1 to 5.

## Revendications

1. Moteur électrique (12), notamment moteur de soufflante de climatisation d'un véhicule automobile, comportant un boîtier (14) servant de boîtier au moteur muni d'un orifice de réception (16) dans lequel le moteur électrique (12) pénètre au moins en partie ainsi que d'éléments de liaison (22, 33, 34) pour l'alimentation en énergie électrique du moteur électrique et des moyens de fixation pour les éléments de liaison électriques (32, 33, 64), les éléments de liaison électriques (32, 33, 64) ayant un connecteur (32, 33) et un logement de connecteur (64) réalisé dans le moteur électrique (12), le connecteur (32, 33) s'introduisant par une ouverture (36) dans le boîtier (14) du moteur,
**caractérisé en ce que**
le connecteur (32, 33) est accroché au moteur électrique (12),pour garantir le contact du moteur électrique (12) sans utiliser de moyen de fixation sur le boîtier (14) du moteur, et
l'ouverture (36) du boitier (14) du moteur sont dimensionnée suffisamment pour ne pas avoir de contact de vibrations entre le connecteur (32, 33) et le boîtier (14) du moteur.

2. Moteur électrique selon la revendication 1,
**caractérisé en ce que**
le logement de connecteur (64) est réalisé dans la région de l'arceau de palier (52, 54) du moteur électrique (12).

3. Moteur électrique selon la revendication 1,
**caractérisé en ce que**
pour garantir le contact, le connecteur (32, 33) comporte au moins un élément d'enclipsage (60, 62, 76) élastique comme un ressort.

4. Moteur électrique selon l'une des revendications 1 ou 3,
**caractérisé en ce que**
le connecteur (32, 33) comporte au moins deux crochets d'enclipsage (602 76).

5. Moteur électrique selon la revendication 2,
**caractérisé en ce que**
le connecteur (32, 33) est accroché à l'arceau de palier (52, 54) de l'arbre (28) du moteur électrique (12).

6. Machine soufflante comportant au moins un rotor de soufflante et un moteur électrique selon l'une des revendications 1 à 5.
